# EUROPÄISCHE PATENTANMELDUNG

(11) **EP 3 454 273 A1**
(43) Veröffentlichungstag der Anmeldung: **13.03.2019**
(21) Anmeldenummer: 17190177.0
(22) Anmeldetag: 08.09.2017
(51) Int. Cl.: G06Q 10/10, G06Q 50/04

(54) **VORRICHTUNG UND VERFAHREN ZUR KONFIGURATION EINER DIENSTLEISTUNGSSPEZIFISCH AUSGESTALTETEN KABINE EINES SERVICEMOBILS**

(71) Anmelder: VOLKSWAGEN AKTIENGESELLSCHAFT, 38440 Wolfsburg (DE)
(72) Erfinder: HÖFLICH, Sebastian, 23570 Lübeck (DE); RÖMMELER, Volker, 38154 Lauingen am Elm (DE); WEHINGER, Jan, 38114 Braunschweig (DE)

(57) **Zusammenfassung**

Es werden eine Vorrichtung, ein Computerprogrammprodukt, eine Signalfolge sowie ein Verfahren zur Konfiguration einer dienstleistungsspezifisch ausgestalteten Kabine, nachfolgend "CAB" genannt, für ein temporär aus einer Fahrlafette und der CAB zusammengesetztes Servicemobil zur Erbringung einer Dienstleistung während der Fahrt vorgeschlagen. Das Verfahren umfasst die Schritte:
- Ermitteln einer Eingabe eines Anwenders (12) zur Auswahl einer vordefinierten Dienstleistungsfamilie, welcher die Dienstleistung zugehört, und in Abhängigkeit der Dienstleistungsfamilie, und
- automatisches Einschränken einer auswählbaren Vielzahl unterschiedlicher CAB-Vorlagen zur Auswahl durch den Anwender (12) auf derartige CAB-Vorlagen, welche zur Erbringung einer Dienstleistung aus der Dienstleistungsfamilie vorgesehen sind.

## Beschreibung

### Stand der Technik

Die vorliegende Erfindung betrifft eine Vorrichtung, ein Computerprogrammprodukt, eine Signalfolge sowie ein Verfahren zur Konfiguration einer dienstleistungsspezifisch ausgestalteten Kabine (CAB) für ein temporär aus einer Fahrlafette und der CAB zusammengesetztes Servicemobil zur Erbringung einer Dienstleistung während der Fahrt. Insbesondere betrifft die vorliegende Erfindung eine Effizienzsteigerung sowie die Erhöhung einer Kundenakzeptanz eines Prozesses zur Bereitstellung eines Servicemobils.

Die Fortentwicklung des Individualverkehrs schreitet derzeit rasch voran. Einerseits werden gemeinsam verwendete Fortbewegungsmittel (Car-Sharing, Pool-Fahrzeuge, etc.) immer stärker nachgefragt und professioneller angeboten. Andererseits schreitet auch die Automatisierung des Personenindividualverkehrs immer rascher voran, so dass die Insassen entsprechender Fahrzeuge die Reisezeit anderweitig nutzen können.

Dienstleistungen hingegen werden bis heute üblicherweise in stationären Einrichtungen (z.B. "Ladengeschäften") angeboten. Anbieter stationärer Dienstleistungen stehen bislang vor den Problemen, dass sie ausschließlich hohe Umsätze in teuren Toplagen erzielen können, die Skalierung schwierig ist, Mietverträge eine langfristige Ortsbindung bewirken und die Investitionskosten und das unternehmerische Risiko hoch sind.

Endkunden, welche die Dienstleistung gern erleben wollen, haben mitunter lange Fahrwege und hohe Kosten für die stationären Dienstleistungen auf sich zu nehmen. Folglich verbringt der Endkunde nicht nur die Fahrzeit zum Arbeitsplatz, sondern zusätzlich die Zeit zum jeweiligen Dienstleister (z.B. Restaurant, Anwalt, Behörde) im Fahrzeug. Aktuell verbringt ein Deutscher ca. 60 Min. pro Tag im Auto. Zudem können viele ältere Menschen nicht mehr fahren. Mit dem autonomen Fahren ist das wieder möglich.

Spartenspezifisch sind auch Ansätze bekannt, bei welchen die Dienstleistung zum Kunden kommt. Beispielsweise werden Frisierdienstleistungen zu Hause angeboten oder fahrende Einzelhändler (der "Eiermann") machen Station in Wohngegenden, um dort Waren abzusetzen.

Vereinzelt ist bereits die Erbringung von Dienstleistung für Fahrgäste bekannt. Beispielsweise können gastronomische Dienstleistungen in Zügen des Fernverkehrs in Anspruch genommen oder audiovisuelle Inhalte ("Bord-Kino") konsumiert werden.

DE 20 2015 106 556 U1 offenbart eine fahrbare Vorrichtung zur mobilen Bereitstellung unterschiedlicher Serviceleistungen in modularer Bauweise, umfassend eine Antriebseinheit, Energiespeichereinheit und/oder dazugehörige Elektronik. Ein austauschbares Servicemodul, welches beispielsweise ein Zapfhahnmodul, ein Kühlmodul, ein Eismodul oder eine Nassstrecke umfassen kann, ist reversibel über korrespondierende Arretierungspunkte mit einem Fahrgestell verbunden.

UBER nutzt mittlerweile Fahrradkuriere, um Essen direkt ins Fahrzeug zu liefern. So können zumindest die Ergebnisse gastronomischer Dienstleitungen bei minimalen Mehrkosten in herkömmlichen Fahrzeugen genossen werden. Die Fahrzeuge selbst hingegen sind nicht service-spezifisch ausgestaltet. Zudem wird die Dienstleistung nicht im Fahrzeug erbracht, sondern endet an der Fahrzeugtür mit der Übergabe des Essens.

www.luxurymobilebarbershop.com bietet einen mobilen Frisiersalon, bei welchem der Kunde den Ort der Dienstleistung (Bsp. Flughafenparkplatz) definiert und der Fahrer den mobilen Friseursalon zu dem definierten Ziel fährt, um dort die Dienstleistung zu erbringen.

In Fortbewegungsmitteln angebotene Dienstleistungen bieten bereits heute On-Demand Services besonders im Luxus-Segment an. Diese bieten ihren Endkunden Ortsunabhängigkeit, Zeitersparnis und Exklusivität, meist jedoch zu einem Preis, welcher für eine vielköpfige Kundschaft zu hoch ist. In Fortbewegungsmitteln angebotene Dienstleistungen sind heute wegen hoher Investitionskosten und mangelnder Auslastung meist im Luxus-Segment zu finden. Gründe hierfür sind, dass das Fahrzeug zum Umbau gekauft werden muss, viel Handarbeit für den Umbau notwendig ist, wenige Standard-Bauteile zur Verfügung stehen, der Service-Anbieter lange Wege zwischen den Kunden zu fahren hat und schließlich das operative Management (Bezahlung, Buchung, Steuern) selbstständig zu übernehmen hat. Zudem sind umfangreiche Modifikationen von Fortbewegungsmitteln stets mit kostspieligen Einzelabnahmen der zuständigen Stellen verbunden.

Ausgehend vom vorgenannten Stand der Technik ist es eine Aufgabe der vorliegenden Erfindung, eine Anwenderunterstützung zur Konfiguration einer CAB eines Servicemobils bereitzustellen.

### Offenbarung der Erfindung

Die vorgenannte Aufgabe wird erfindungsgemäß durch die Gegenstände der unabhängigen Ansprüche gelöst. Die Unteransprüche zeigen bevorzugte Weiterbildungen der Erfindung.

Die Erfindung basiert auf dem Grundgedanken, dass die Konsumbereitschaft von Fahrgästen grundsätzlich höher ist, als wenn dieselbe Person frei verfügbare Zeit für den Konsum einer Dienstleistung aufwenden muss.

Um den Konsum von Dienstleistungen während der Fortbewegung besser auf die Anforderungen des Service-Erbringers und des Kunden anzupassen, fußt die vorliegende Erfindung beispielsweise auf dem Konzept, Fahrzeugplattformen mit allen für ein autonomes Fahren notwendigen technischen Einheiten, wie Fahrwerk, Antriebseinheit usw. bereitzustellen, welche bedarfsweise mit auf eine Dienstleistungserbringung während der Fahrt zugeschnittenen Fahrgastzellen verbindbar sind. Die Fahrgastzellen werden im Rahmen der vorliegenden Offenbarung als "CABs" bezeichnet. "CAB" steht für "Kabine" oder "Cabin".

Anders ausgedrückt ist eine CAB ein für einen spezifischen Service oder eine Servicegruppe angepasster Fahrzeugaufbau, der alle Schnittstellen bereithält, um die zur Dienstleistungserbringung erforderliche Einrichtung zu beherbergen und zu betreiben.

Die CAB kann daher als mechanische Einheit verstanden werden, welche als solche über vordefinierte Schnittstellen mit der Fahrzeugplattform/der Fahrlafette verbunden werden kann. Die Schnittstellen sorgen für eine mechanisch reversible, jedoch zuverlässige Verbindung zwischen der CAB und der Fahrlafette. Weitere Schnittstellen können zur Energieübertragung, insbesondere elektrischer Energie, zwischen der CAB und der Fahrlafette eingerichtet sein. Auch diese Schnittstellen sind reversibel ausgestaltet. Insbesondere können weitere Betriebsmittel (Flüssigkeiten), mechanische Energieübertragungsmittel, z.B. Wellen, Zahnräder, o.ä. für eine mechanische Energieübertragung von der Fahrlafette an die CAB, sowie Funkverbindungen und/oder eine datentechnische Verknüpfung zwischen der einzelnen CAB und der Fahrlafette sowie ihren Bausteinen vorgesehen sein. Für alle informationstechnischen Verknüpfungen der Fahrlafette mit der CAB bieten sich als Schnittstellen beispielsweise elektrische und/oder optische Leitungen, insbesondere Bussysteme, an.

Um eine kostengünstige, rasche und wenig fehleranfällige Konfiguration einer aus Fahrlafette und CAB bestehenden mobilen Einheit (auch "Servicemobil") zu ermöglichen, kann vorgesehen sein, dass sämtliche Schnittstellen zwischen der CAB und der Fahrlafette in im Wesentlichen identischer Richtung zueinander korrespondierend angeordnet sind. Mit anderen Worten kann eine CAB in einer ersten Richtung mechanisch mit der Fahrlafette in Eingriff gebracht werden, wobei beispielsweise Schienen für eine formschlüssige Verbindung zwischen CAB und Fahrlafette sorgen. Dieselbe Richtung kann für die energetische Verbindung zwischen der Fahrlafette und der CAB vorgesehen sein. Insbesondere kann sichergestellt werden, dass eine korrekte mechanische Verbindung zwischen der Fahrlafette und der CAB automatisch zu einer korrekten energetischen Verbindung der Fahrlafette mit der CAB führt. Entsprechendes kann für die Schnittstellen zur Betriebsmittelübertragung gelten. Sofern auch Daten zwischen der CAB und der Fahrlafette (z.B. bidirektional) auszutauschen sind, können beispielsweise leitungsvermittelnde Schnittstellen entsprechend angeordnet sein und bei der Verbindung zwischen der Fahrlafette und der CAB automatisch geschlossen werden. Dies schließt eine drahtlose Übertragung von Daten zwischen Fahrlafette und CAB jedoch nicht aus, wozu ebenfalls Schnittstellen vorgesehen sein können. Zumindest können mehrere Schnittstellen, insbesondere wesensgleiche standardisierte Schnittstellen, räumlich zusammengefasst sein und reversibel, jedoch gegen ein unerwünschtes Lösen gesichert, an korrespondierenden Positionen an der Fahrlafette/der CAB angeordnet sein.

Durch die oben genannte Standardisierung können für die Erbringung von Dienstleistungen während der Fahrt erforderliche Randbedingungen geschaffen werden, welche eine erhebliche Kostenreduzierung und einen bislang unerreichten Individualisierungsgrad von Fahrzeugen ermöglichen. Während die CABs den Dienstleistern vordefinierte Rahmen bieten, um ihre Dienstleistung sicher und anwendertauglich anzubieten, sorgt die Fahrlafette für effiziente, komfortable, rasche und zeitsparende Fortbewegung, insbesondere im Falle automatisch fahrfähiger Fahrlafetten. Hierdurch wird älteren oder fahruntüchtigen Personen sowie Kindern während der Reise eine individuelle Dienstleistung geboten.

Das oben genannte Konzept aus Fahrlafette und CAB ermöglicht die Erbringung von individualisierten Dienstleistungen unterwegs, wobei das beschriebene Konzept die physische Plattform darstellt, welche in Verbindung mit einer digitalen Vermittlungsplattform (Server) potentiellen Kunden zugänglich gemacht wird. Die hier offenbarte Technologie beschreibt das Zusammenspiel der einzelnen Komponenten und Akteure in dem Plattform-Ökosystem. Es ermöglicht die freie Zeit, die durch das autonome Fahren bzw. Taxifahrten entsteht, optimal zu nutzen und zu monetarisieren.

In dem Plattform-Ökosystem werden Probleme verschiedener Akteure gelöst. Dabei ist zwischen Endkunden (nutzen Services während der Fahrt), Service-Anbietern (bieten Services während der Fahrt an wie z.B. Anwälte) und Microservice-Providern (stellen Bausteine zur Ausstattung der Fahrzeuge bereit) zu unterscheiden. Die Bausteine müssen nicht physisch sein bzw. die gegenständliche Inneneinrichtung der CAB betreffen, sondern könnten auch Software-Bausteine sein, z.B. eine Darstellung eines Restaurant-Menüs auf einem Display.

Die Vermittlung aus Fahrlafette und CAB bestehender Servicemobile kann beispielsweise über einen Server in Verbindung mit vom Kunden/Dienstleistungsanbieter verwendeten (mobilen) Drahtloskommunikationsendgeräten ("Anwenderendgerät") vorgenommen werden. Eine Applikation stellt hierbei die Schnittstelle zum Endkunden dar. Der Endkunde bucht über die Applikation die mobilen On-Demand-Services. Dazu definiert der Endnutzer Startpunkt, Ziel, Startzeit und Art der während der Fahrt zu erbringenden Dienstleistung. Endkunden können weitere Aufgaben über die Applikation erledigen wie z.B. Anfragen senden, Suchergebnisse sichten, Servicemobile/Dienstleistungen buchen, Bewertungen abgeben sowie die gebuchten bzw. bezogenen Dienstleistungen bezahlen.

Der Serviceanbieter kann ein eigenes Profil digital bereithalten, mittels dessen sich der Endnutzer über die angebotenen Services, Kundenmeinungen etc. informieren kann. Entscheidet sich der Endnutzer für den Bezug eines Services, wird seine Anfrage auf dem Anwenderendgerät des mobilen Serviceanbieters oder in dessen Fahrzeug angezeigt. Der Serviceanbieter kann die Anfrage akzeptieren, wodurch der kombinierte Beförderungs-/Dienstleistungsvertrag zustande kommt.

Im Rahmen der vorliegenden Offenbarung erbringbare Dienstleistungen lassen sich beispielsweise in die folgenden Ausprägungen/Kategorien gliedern:
- Die Dienstleistung kann von einem Menschen oder unbemannt erbracht werden (z.B. Friseur gegenüber Multimedia-Darbietung)
- individualisierte CAB oder Massenware (z.B. generisches Restaurant gegenüber systemgastronomischer Ausgestaltung).

Zusammengefasst umfasst die der vorliegenden Technologie zugrundeliegende Fahrzeugarchitektur zumindest zwei gegenständliche Komponenten: Die zur Fortbewegung erforderliche Komponente wird als "Fahrlafette" bezeichnet, in welcher sich die Technik zum autonomen Fahren befinden kann. Zudem wird der Fahrzeugaufbau (CAB) verwendet, der alle Schnittstellen bereithält, um die zur Dienstleistungserbringung erforderliche, spezifische Einrichtung zu beherbergen und zu betreiben. Die aus den vorgenannten Komponenten bestehenden Fahrzeuge/Fortbewegungsmittel werden auch als "Servicemobil" bezeichnet. Sie könnten auch als "physische Apps auf Rädern" bezeichnet werden, da sie hinsichtlich ihres Funktionsumfangs so vielfältig sind, wie durch Applikationen individualisierte Smartphone-Plattformen.

Ausgehend von der vorstehend offenbarten Technologie wird die o.g. Aufgabe durch ein Verfahren zur Konfiguration einer dienstleistungsspezifisch ausgestalteten CAB gelöst. Die CAB dient der temporären Verbindung mit einer Fahrlafette, wodurch ein Servicemobil zur Erbringung einer Dienstleistung während der Fahrt des Servicemobils entsteht. Die Konfiguration der CAB wird beispielsweise durch einen späteren Dienstleistungsanbieter vorgenommen. Mit anderen Worten wird ähnlich einem Bestellprozess eines Automobils über einen entsprechenden Konfigurator ein computergestütztes Verfahren bereitgestellt, durch welches der Anwender mit geringstmöglicher Hilfestellung durch geschultes Personal eine zum Anbieten der von ihm beabsichtigten Dienstleistung geeignetes Servicemobil erstellt werden kann. Insbesondere die Ausgestaltung der CAB wird wie nachfolgend beschrieben vorgeschlagen. Hierzu werden dem Anwender vordefinierte Dienstleistungsfamilien zur Auswahl angeboten. Beispielsweise kann eine Dienstleistungsfamilie dadurch gekennzeichnet sein, dass ihre Mitglieder (die enthaltenen Dienstleistungen) durch eine Servicekraft, also einen Menschen, ausgeführt werden, während eine andere Dienstleistungsfamilie dadurch gekennzeichnet ist, dass ihre Familienmitglieder unbemannt erbracht werden können. Auch ein bestimmter inhaltlicher Bezug zwischen den Dienstleitungen kann die Dienstleistungsfamilie kennzeichnen. Im Ansprechen auf eine Eingabe eines Anwenders, mittels welcher der Anwender diejenige Dienstleistungsfamilie auswählt, welcher die von ihm zu erbringende Dienstleistung angehört, wird eine auswählbare Vielzahl unterschiedlicher CAB-Vorlagen, welche zur Auswahl durch den Anwender vorgesehen sind, automatisch eingeschränkt. Mit anderen Worten werden anschließend lediglich derartige CAB-Vorlagen für die weitere Konfiguration bereitgestellt, welche zur Erbringung der vom Anwender zu erbringenden Dienstleistung, zumindest jedoch für die vom Anwender gewählte Dienstleistungsfamilie vorgesehen sind. Die Auswahl der Dienstleistungsfamilie kann beispielsweise durch eine Texteingabe, eine Check-Box, ein Drop-Down-Menü oder durch Anklicken einer grafischen Repräsentation/eines Sinnbildes für die Dienstleistungsfamilie unterstützt werden. Insbesondere kann eine grafische Anwenderschnittstelle die Dienstleistungsfamilien zur Auswahl durch den Anwender stellen. Die vorgenannten Schritte können selbstverständlich durch eine Vielzahl weiterer Schritte ergänzt werden, welche beispielsweise zwischen die vorgenannten Schritte einzufügen sind. Im Ergebnis wird die Erstellung einer CAB sowie die Erbringung von Dienstleistungen während der Fahrt mit einem Servicemobil bestmöglich unterstützt und die mittel- bis langfristig während der Fahrt zu beziehenden Dienstleistungen besonders vielfältig. Insbesondere wird für diejenigen Dienstleister, welche über wenig oder so gut wie keinen automobilen Sachverstand verfügen, eine wichtige Hilfestellung zum Gestalten eines Servicemobils bereitgestellt.

Die Unteransprüche zeigen bevorzugte Weiterbildungen der Erfindung.

Bevorzugt kann die eingeschränkte Vielzahl verfügbarer unterschiedlicher CAB-Vorlagen durch eine Vielzahl grafischer Repräsentationen dargestellt werden. Beispielsweise können Sinnbilder oder Miniaturbilder der CAB-Vorlagen auf einem Bildschirm dargestellt werden. Insbesondere können die Repräsentationen der CAB-Vorlagen ausgewählt, vergrößert und/oder gedreht werden. Alternativ oder zusätzlich kann nach einem Auswählen einer jeweiligen Repräsentation eine Vielzahl zugeordneter Informationen, Restriktionen und Anforderungen dargestellt werden, um den Anwender über die Anforderungen und Möglichkeiten in Verbindung der Verwendung der CAB-Vorlage zu informieren.

Um den Auswahlprozess bzw. die Konfiguration des Servicemobils weiter zu unterstützen, kann in einem Schritt eine Darstellung von Repräsentationen sämtlicher in der Dienstleistungsfamilie enthaltener vorgesehener Dienstleistungen erfolgen. Mit anderen Worten wird bei Auswahl der Dienstleistungsfamilie eine Übersicht der enthaltenen Dienstleistungen ausgegeben. Der Anwender kann die Dienstleistungen der Dienstleistungsfamilie somit überblicksartig einsehen und entscheiden, ob ihn die gewählte Dienstleistungsfamilie einer geeigneten Auswahl näher bringt. Sofern dies nicht der Fall ist, kann der Anwender eine andere Dienstleistungsfamilie auswählen und die ihr zugeordneten/untergeordneten Dienstleistungen in Form jeweiliger Repräsentationen anzeigen lassen.

In entsprechender Weise kann der Anwender eine der dargestellten Dienstleistungen der ausgewählten Dienstleistungsfamilie anwählen und die der Dienstleistung zugeordneten Informationen anzeigen lassen. Sofern die ausgewählte Dienstleistung der von ihm anzubietenden Dienstleistung entspricht, kann anschließend eine der Dienstleistung zugeordnete Vielzahl verfügbarer unterschiedlicher CAB-Vorlagen dargestellt werden. Die CAB-Vorlagen eignen sich sämtlich für die Erbringung der ausgewählten Dienstleistung, können sich jedoch hinsichtlich mehrerer Eigenschaften voneinander unterscheiden. Beispielsweise können unterschiedliche Designs und/oder Kosten und/oder Größen und/oder Restriktionen an die jeweilige Fahrlafette und/oder zu erwartende Lebensdauern mit den jeweiligen CAB-Vorlagen geknüpft sein. Wenn auch die dargestellte Repräsentation verfügbarer unterschiedlicher CAB-Vorlagen als für die zu erbringende Dienstleistung geeignet zu verstehen sind, so schließt dies nicht aus, dass weitere Konfigurationsschritte zur Auswahl von Einrichtungen, Festlegung von Parametern, etc., erforderlich sein können, um eine funktionsfähige CAB zu definieren. Auf diese Weise können die Freiheitsgrade zur Individualisierung einer CAB geringstmöglich eingeschränkt werden.

Die CAB-Vorlagen können als Modelle einer CAB verstanden werden. Hierbei können Sie beispielsweise datentechnisch vollständige Spezifikationen zumindest für gewisse Bestandteile der späteren CAB bereitstellen. Zumindest können datentechnische Teil-Spezifikationen durch die CAB-Vorlagen festgelegt sein, welche beispielsweise hinsichtlich einzelner Parameter und/oder Dimensionen durch den Anwender konfiguriert werden können, ohne die Eignung für die zu erbringende Dienstleistung einzubüßen. Mit anderen Worten bietet die CAB-Vorlage dem (Unbedarften) einen Rahmen (eng. "frame work"), innerhalb dessen eine sichere, komfortable, effiziente, wartungsarme und auch optisch ansprechende CAB erstellt werden kann. Selbstverständlich können andere, im automotiven Umfeld relevante oder gar essentielle Randbedingungen durch die CAB-Vorlagen sichergestellt werden. Insbesondere können die CAB-Vorlagen (vereinfachte) datentechnische 3D-Modelle umfassen, welche dem Anwender einen bestmöglichen Eindruck zur Funktion und Optik der späteren CAB gewährleistet.

Beispielsweise kann die ausgewählte CAB durch Abfragen einer Definition zur Farbgebung durch den Anwender optisch ansprechend gestaltet und für den Wiedererkennungswert (bzw. "branding", "corporate identity" oder "corporate design") des Anwenders und seiner Dienstleistung individualisiert werden. Hierzu kann die CAB-Vorlage Oberflächenbereiche vordefinieren, welche in Verbindung miteinander identische Farben aufweisen sollten, um die Optik der CAB ansprechend zu gestalten. Beispielsweise kann auch eine Farbpalette für die CAB vordefiniert sein, durch welche vermieden wird, dass nicht miteinander harmonierende Farben durch den Anwender ausgewählt werden können. Zumindest kann vermieden werden, dass der Anwender ohne zuvor eine Systemmeldung zu quittieren, gegen vordefinierte Farbdefinitionen verstoßen kann.

Eine weitere Hilfestellung zur Konfiguration der CAB kann sich daraus ergeben, dass die Eingaben des Anwenders auch zur Auswahl eines vordefinierten Verkehrsraums (z.B. eine Region, ein Staat, ein Territorium, o.ä.) verwendet wird. In Abhängigkeit der Eingabe kann beispielsweise automatisch festgelegt werden, dass eine bestimmte Ausstattungsvariante, ein bestimmter Parameter oder eine andere Eigenschaft der CAB essentiell ist oder gar nicht zur Verfügung steht. Beispielsweise kann auf diese Weise ausgeschlossen werden, dass die zu gestaltende CAB gegen gesetzgeberische Vorgaben verstößt. Alternativ oder zusätzlich kann vermieden werden, dass die Akzeptanz bei potentiellen Kunden durch ungeeignete Merkmale der CAB nicht gewährleistet ist. Länderspezifische Varianten und kundenkreisabhängige Vorgaben können auf diese Weise bestmöglich eingehalten bzw. erfüllt werden.

Beispielsweise können regionale Klimadaten verwendet werden, um eine Eignung der CAB für einen Einsatz in der Region sicherzustellen. Beispielsweise kann eine Heiz- und/oder Klimaanlage, eine Tönung eines Fensters oder eine andere Maßnahme zur Gewährleistung angenehmer Innenraumtemperaturen für bestimmte Regionen vorgesehen sein oder hinsichtlich einzelner Parameter zumindest empfohlen werden. Auch kann automatisch eine Bordnetzarchitektur und alternativ oder zusätzlich eine elektrische Nenn-Bordnetzspannung mit der Auswahl eines vordefinierten Verkehrsraums/eines Staates o.ä. verknüpft werden, um die Eignung des Servicemobils für einen dortigen Einsatz sicherzustellen.

Um sich in einer gegebenenfalls vergleichsweise unübersichtlichen Vielzahl von CAB-Vorlagen zurechtzufinden, kann der Anwender zudem in die Lage versetzt werden, innerhalb der CAB-Vorlagen bestimmte Kategorien oder andere Eigenschaften zu filtern. Beispielsweise kann eine CAB-Kategorie, ein CAB-Kaufpreis, eine Verfügbarkeit/Lieferdauer, Rezensionen und/oder ein Baujahr/Erstellungsdatum für gegebenenfalls bereits gefertigte CABs als Filterkriterium verwendet werden.

Weitere Möglichkeiten zur Unterstützung des Anwenders bei der Definition wichtiger Kriterien bieten Fragekataloge, welche Dienstleistungsfamilien spezifisch, Dienstleistungsspezifisch o.ä., ausgestaltet sein können. Beispielsweise kann gefragt werden, wie viele Kunden der Anwender zeitgleich bedienen können möchte. Auch die Häufigkeit der Verwendung kann darüber Auskunft geben, welche Qualität die Merkmale der CAB aufweisen und welche Kapazität beispielsweise für Betriebsmitteltanks vorzusehen ist. Zudem kann abgefragt werden, ob überwiegend Lang- oder Kurzstrecken mit der CAB zurückgelegt werden sollen. Auch eine Kategorisierung eines Qualitäts-/Preisniveaus für den zu erbringenden Service kann vom Anwender abgefragt werden, um einzelne Pakete zu schnüren oder Parameter für die CAB (vorab) festzulegen.

Die CAB kann in Abhängigkeit unterschiedlicher Informationen und innerhalb ihrer Eignung für die Erbringung einer vordefinierten Dienstleistung hinsichtlich des Federweges, einer Sitzhöhe, Oberflächenmaterial, Abdichtung der Fahrgastzelle, Sicherheitsvorrichtungen, Überwachungsvorrichtungen (Innenraumkamera, etc.) verwendbarer Betriebsmittel, landesspezifischer Schnittstellen (Steckdosen-Format) an die jeweiligen Bedürfnisse angepasst werden, wodurch die Akzeptanz der adressierten Endkunden steigt bzw. ermöglicht wird.

Gemäß einem zweiten Aspekt der vorliegenden Erfindung wird eine Vorrichtung zur Konfiguration einer dienstleistungsspezifisch ausgestalteten Kabine (CAB) für ein temporär aus einer Fahrlafette und der CAB zusammengesetztes Service-Mobil vorgeschlagen, mit welchem eine Erbringung einer Dienstleistung während der Fahrt des Servicemobils möglich wird. Die Vorrichtung kann beispielsweise als stationäre und/oder mobile Vorrichtung ausgestaltet sein. Sie umfasst einen Dateneingang, eine Auswerteeinheit und einen Datenausgang. Der Dateneingang kann beispielsweise zur Erfassung der Anwendereingaben vorgesehen sein. Die Auswerteeinheit kann als programmierbarer Prozessor, Mikrocontroller, elektronisches Steuergerät o.ä. ausgestaltet sein. Der Datenausgang kann beispielsweise als Netzwerk- und/oder Monitorausgang ausgestaltet sein. Dies schließt nicht aus, dass der Datenausgang einen Monitor oder eine andere Bildgebungseinrichtung umfasst. Mittels des Dateneingangs ist die Vorrichtung eingerichtet, eine Eingabe eines Anwenders, welcher ein späterer Dienstleistungsanbieter sein kann, zur Auswahl einer vordefinierten Dienstleistungsfamilie entgegenzunehmen. Die Dienstleistungsfamilie wird vom Anwender danach ausgesucht, ob sie (wahrscheinlich) diejenige Dienstleistung umfasst, welche der Anwender anzubieten gedenkt. In Abhängigkeit der vom Anwender gewählten Dienstleistungsfamilie wird anschließend eine auswählbare Vielzahl unterschiedlicher CAB-Vorlagen eingeschränkt und zur Auswahl durch den Anwender bereitgestellt. Das Einschränken der Vielzahl unterschiedler CAB-Vorlagen kann automatisch erfolgen. Mit anderen Worten kann in Abhängigkeit der gewählten Dienstleistungsfamilie die Vielzahl verfügbarer CAB-Vorlagen dahingehend gefiltert werden, ob sie zur Erbringung sämtlicher Dienstleistungen der Dienstleistungsfamilie geeignet sind. Zumindest kann sichergestellt werden, dass die dargestellte Vielzahl CAB-Vorlagen für mindestens eine Dienstleistung der Dienstleistungsfamilie geeignet sind. Die Merkmale, Merkmalskombinationen und die sich aus diesen ergebenden Vorteile der erfindungsgemäßen Vorrichtung entsprechen derart ersichtlich denjenigen, welche in Verbindung mit dem erfindungsgemäßen Verfahren ausgeführt worden sind, dass zur Vermeidung von Wiederholungen auf die obigen Ausführungen verwiesen wird.

Gemäß einem dritten Aspekt der vorliegenden Erfindung wird ein Computerprogrammprodukt (z.B. ein Datenspeicher) vorgeschlagen, auf welchem Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann beispielsweise als CD, DVD, Blu-ray-Disc, Flash-Speicher, Festplatte, RAM/ROM, Cache, etc., ausgestaltet sein.

Gemäß einem vierten Aspekt der vorliegenden Erfindung wird eine Signalfolge repräsentierend Instruktionen vorgeschlagen, welche eine Auswerteeinheit einer erfindungsgemäßen Vorrichtung in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

### Kurzbeschreibung der Zeichnung

Nachfolgend werden Ausführungsbeispiele der vorliegenden Erfindung anhand der beigefügten Zeichnungen im Detail beschrieben. In den Zeichnungen ist:
- Figur 1: eine Prinzipskizze veranschaulichend im Rahmen der vorliegenden Erfindung verwendbare Ausführungsbeispiele für CABs in Verbindung mit einer Fahrlafette, um ein Servicemobil zur Realisierung der vorliegenden Erfindung zu erzielen,
- Figur 2: eine schematische Darstellung eines Plattform-Ökosystems zur Veranschaulichung von Informationsflüssen bei der Realisierung der vorliegenden Erfindung,
- Figur 3: eine schematische Darstellung einer Fahrlafette, zweier CABs und ihrer gegenseitigen Schnittstellen gemäß einem Ausführungsbeispiel der hier offenbarten Technologie,
- Figur 4: zeigt eine perspektivische Darstellung einer Anwenderin, welche mittels eines Ausführungsbeispiels einer erfindungsgemäßen Vorrichtung ein Ausführungsbeispiel eines erfindungsgemäßen Verfahrens durchführt, und
- Figur 5: ein Flussdiagramm veranschaulichend Schritte eines Ausführungsbeispiels eines erfindungsgemäßen Verfahrens zur Konfiguration einer dienstleistungsspezifisch ausgestalteten CAB.

### Ausführungsformen der Erfindung

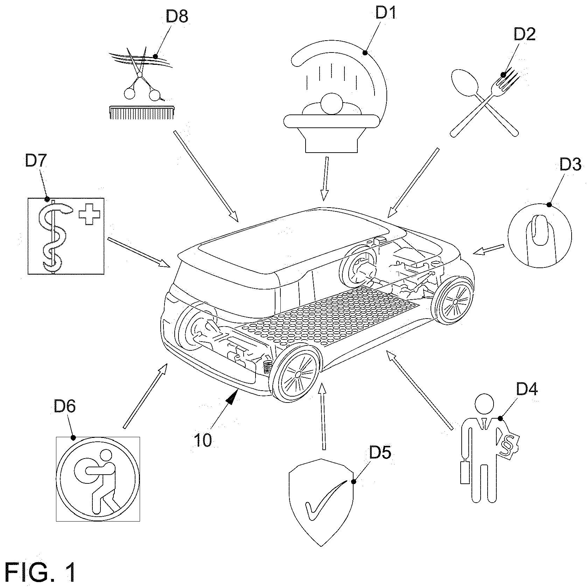

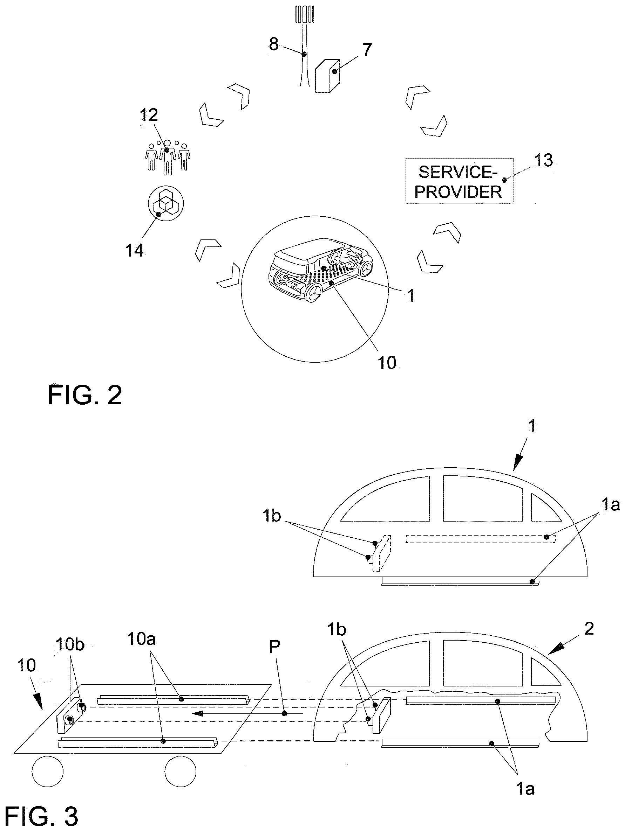

Figur 1 zeigt eine schematische Darstellung einer Fahrlafette 10 eines Servicemobils gemäß einem Ausführungsbeispiel der hier offenbarten Technologie. Die Fahrlafette bringt dabei sämtliche Merkmale mit, welche für die Fortbewegung, insbesondere die automatische Fortbewegung, erforderlich sind. Lediglich beispielhaft seien das Fahrwerk, der Antriebsstrang, der Energiespeicher, Längs-/Querführungslogik und -einrichtungen, Außenbeleuchtung, etc. genannt. Im Rahmen der vorliegend offenbarten Technologie werden (nicht dargestellte) CABs verwendet, um die Fahrlafette zur Erbringung einer jeweiligen Dienstleistung D1 bis D8 spezifisch einzurichten. Beispielsweise kann eine Bestrahlungs- und/oder Bräunungseinrichtung D1 in Form einer CAB mit der Fahrlafette 10 verbunden werden, um die Dienstleistung "Bräunung" anbieten zu können. Beispielsweise können eine UV-Bestrahlungseinheit und/oder eine Bräunungsdusche enthalten sein. Um gastronomische Dienstleistungen D2 erbringen zu können, kann eine Restaurant-CAB mit der Fahrlafette 10 verbunden werden. Die Zubereitung von Speisen und der Verzehr derselben kann durch die Einrichtung der CAB ermöglicht werden. Eine Kosmetik- bzw. Nagelpflege-Dienstleistung D3 kann beispielsweise erfordern, dass die CAB besondere Werkbänke, eine Absauganlage zum raschen Austausch der Innenraumluft und besonders helle Beleuchtungseinrichtungen (sog. Spots) aufweist. Zur Erbringung von Rechtsberatungsdienstleistungen D4 können eine Bibliothek und/oder mindestens zwei Sitzgelegenheiten in einer entsprechend ausgestalteten CAB vorgesehen sein. Entsprechendes gilt für eine Versicherungsberatungs-Dienstleistung bzw. Finanzberatungs-Dienstleistung D5. Insbesondere können hierbei Video-Konferenz-Hardware und ein großer Bildschirm zur Darstellung von Grafiken und anderen Präsentationsinhalten vorgesehen sein. Auch Reha-Dienstleistungen D6 und ärztliche Dienstleistungen D7 können durch die Ausgestaltung einer jeweiligen CAB bestmöglich unterstützt werden. Beispielsweise können Untersuchungs- und/oder Trainingsgeräte Bestandteile entsprechender CABs sein. Um Frisierdienstleistungen D8 bereitstellen zu können, kann beispielsweise ein Waschbecken, wie es in Friseursalons zum Haarewaschen üblich ist, ein 230V-Stecker zum Betreiben eines Haartrockners, ein großer Spiegel und ein höhenverstellbarer Frisierstuhl vorgesehen sein. Die vorgenannten CABs können über reversible mechanische Schnittstellen mechanisch fest und crash-sicher mit der Fahrlafette 10 verbunden werden. Um Energie- und Informationsflüsse zwischen der Fahrlafette 10 und der CAB zu gewährleisten, werden in Verbindung mit Figur 3 detailliert dargestellte reversible Schnittstellen vorgeschlagen.

Figur 2 zeigt eine schematische Darstellung eines Plattform-Ökosystems zur Veranschaulichung von Informationsflüssen bei der Realisierung der vorliegend offenbarten Technologie. Ein Micro-Service-Provider 14 individualisiert die CABs 1 der Servicemobile, welche anschließend mit einer jeweiligen Fahrlafette 10 (temporär oder dauerhaft) verbunden und bereitgestellt werden. Die Vermittlung der Servicemobile wird von einem Serviceprovider 13 übernommen, welcher über einen Server 7 und beispielsweise einen Funkturm 8 eines Drahtloskommunikationsnetzwerkes den Bedarf der Anwender 12 ermittelt und mit den grundsätzlich verfügbaren/angebotenen Servicemobilen abgleicht. Bestmögliche Kombinationen aus angebotenem Servicemobil und interessiertem Anwender 12 führen zum einzelnen Vertragsabschluss über die Bereitstellung von Mobilitätsdienstleistung und einer CAB-spezifischen Dienstleistung. Der Micro-Service-Provider 14 kann auch die einzelne Dienstleistung bzw. ein Dienstleistungspaket vor dem Endkunden erbringen und hierzu den Betrieb des Servicemobils bzw. der CAB überwachen und sicherstellen oder gar an Bord des Servicemobils eine manuelle Dienstleistung in einem bemannten Servicemobil erbringen. Selbstverständlich muss der Serviceprovider 14 nicht identisch mit dem Hersteller/Ausstatter der CAB 1 sein. Diesbezüglich ergeben sich unterschiedliche Konstellationen zum Design, zur Erstellung und zur Verwendung der CABs bei der Dienstleistungserbringung vor dem Endkunden.

Figur 3 zeigt eine prinzipielle, perspektivische Skizze zur temporären Verbindung einer Fahrlafette 10 mit einer ersten CAB 1 oder einer zweiten CAB 2. Korrespondierend zueinander ausgestattete mechanische Schnittstellen 10a auf der Fahrlafette 10 und mechanische Schnittstellen 1a in den CABs 1, 2 sorgen für eine rasche und crash-sichere Verbindung zwischen CAB 1, 2 und Fahrlafette 10. Sofern Informationen und/oder Energie von der CAB 1, 2 zur Fahrlafette 10 oder anders herum ausgetauscht werden sollen, werden zusätzliche, zueinander korrespondierende Schnittstellen 1 b, 10b an den CABs 1, 2 und der Fahrlafette 10 angeordnet, welche ebenfalls in Richtung eines Pfeils P miteinander in Eingriff gebracht werden. Alternativ oder zusätzlich können in entsprechender Weise weitere oder alternative Schnittstellen zwischen den CABs 1, 2 und der Fahrlafette 10 miteinander in Eingriff gebracht werden. Beispielsweise können eine Heiz-/Kühlleistung, eine hydraulische Energie, Druckluft, etc., zwischen den CABs 1, 2 und der Fahrlafette 10 ausgetauscht werden. Die Schnittstellen können Informationstechnisch überwacht werden, so dass erst bei einer ordnungsgemäßen Kontaktierung der jeweiligen Schnittstellen und insbesondere einer entsprechenden Verriegelung der Schnittstellen eine Verwendung/Fahrt des Servicemobils ermöglicht wird. Während die dargestellten mechanischen Schnittstellen 10a der Fahrlafette 1 mit U- bzw. Schienenprofile ausgestaltet sind, welche mit beispielhaft dargestellten T-Profilen als Schnittstellen 1a der CABs 1, 2 in Eingriff gebracht werden können, versteht es sich von selbst, dass andere mechanische Schnittstellen möglich sind, welche gegebenenfalls in einer anderen Richtung als derjenigen des dargestellten Pfeils P miteinander in Eingriff zu bringen sind. Sofern die CABs 1, 2 jedoch aufgebockt in geeigneter Höhe gelagert werden können, kann die Fahrlafette 10 wie dargestellt selbsttätig unter die CAB 2 fahren, wobei die Schnittstellen 1b, 1a, 10b, 10a miteinander in Eingriff gebracht werden, ohne dass eine aufwendige Hebevorrichtung o.ä. erforderlich ist. Gegebenenfalls kann ein Luftfahrwerk der Fahrlafette 10 verwendet werden, um eine geringfügige Höhenanpassung vorzunehmen. Während im Rahmen der vorliegend offenbarten Technologie eine CAB nicht notwendiger Weise als Fahrgastzelle mit dienstleistungsspezifischer Inneneinrichtung verstanden werden muss, stellt dies eine geeignete Ausgestaltung der vorliegend offenbarten Technologie dar. Alternativ kann die CAB im Sinne der vorliegend offenbarten Technologie einen lediglich temporären Bestandteil der (integral mit der Fahrlafette 10 gefertigten) Fahrgastzelle darstellen. Bei dieser Ausgestaltung können die in Figur 3 dargestellten Schnittstellen (oder andere geeignete Schnittstellen) zwischen der CAB und der Fahrgastzelle angeordnet sein. Die Schnittstellen können beispielsweise am Dach und/oder in den Seitenwänden und/oder im Boden der CAB sowie der Fahrgastzelle angeordnet sein.

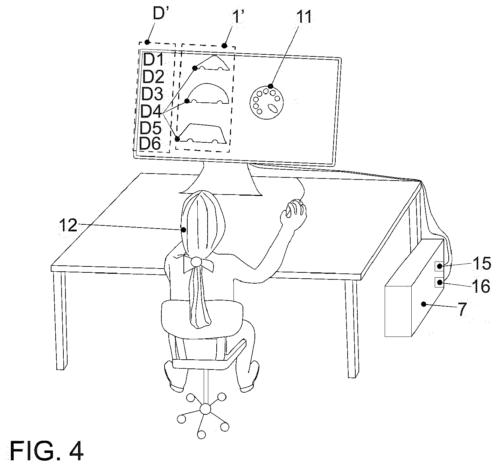

Figur 4 zeigt eine Anwenderin 12, welche eine Dienstleistung während der Fahrt eines Servicemobils anbieten und ihr Servicemobil hierzu konfigurieren möchte. Sie bedient sich hierzu eines Desktop-PCs, welcher eine Auswerteeinheit 7, einen Mouse-Port 15 als Dateneingang und einen Monitor-Port 16 als Datenausgang aufweist. Auf dem Monitor der Vorrichtung wird links im Bild eine Repräsentation D' einer Vielzahl Dienstleistungen dargestellt, welche einer zuvor gewählten (nicht dargestellten) Dienstleistungsfamilie untergeordnet sind. Die Anwender 12 hat die Dienstleistung D4 ausgewählt, da diese der von ihr zu erbringenden Dienstleistung identisch ist. Im Ansprechen auf die Auswahl der Dienstleistung D4 wird eine Repräsentation 1' einer eingeschränkten Vielzahl verfügbarer unterschiedlicher CAB-Vorlagen angezeigt. Sämtliche Repräsentationen 1' beziehen sich auf CAB-Vorlagen, welche zur Ausführung der Dienstleistung D4 geeignet sind. Die Auswahl der in der Bildschirmmitte dargestellten CAB-Vorlage erfolgt anhand persönlicher Präferenzen der Anwenderin 12. Im Ansprechen auf die Auswahl wird eine Repräsentation 11 einer Farbpalette auf dem Bildschirm dargestellt, welche lediglich für die gewählte CAB-Vorlage geeignete Farbkombination zur Auswahl stellt. Durch Auswahl einer Farbe/Farbkombination kann die Anwenderin 12 die erfindungsgemäße Konfiguration einer dienstleistungsspezifischen CAB abschließen, welche sowohl ihren persönlichen Vorlieben als auch sämtliche andere, für die Erbringung einer Dienstleistung während der Fahrt bestehende Restriktionen erfüllt.

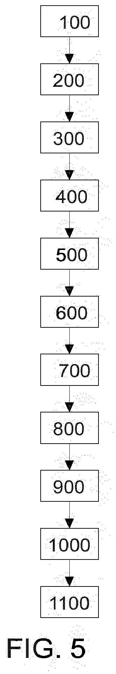

Figur 5 zeigt Schritte eines Ausführungsbeispiels eines erfindungsgemäßen Verfahrens. In Schritt 100 wird einem Anwender eine Vielzahl vordefinierter Dienstleistungsfamilien repräsentierend jeweilige Vielzahlen miteinander verwandter vordefinierter Dienstleistungen dargestellt. Mit anderen Worten wird dem Anwender die Auswahl einer der Dienstleistungsfamilien ermöglicht. In Schritt 200 wird eine Eingabe/Auswahl durch den Anwender ermittelt, wodurch eine der vordefinierten Dienstleistungsfamilien ausgewählt wird. In Schritt 300 werden Repräsentationen sämtlicher in der Dienstleistungsfamilie enthaltener vorgesehener Dienstleistungen dargestellt. In Schritt 400 wird eine Eingabe des Anwenders zur Auswahl einer verfügbaren Dienstleistung ermittelt, welche der ausgewählten Dienstleistungsfamilie zugehört. In Schritt 500 wird die auswählbare Vielzahl unterschiedlicher CAB-Vorlagen automatisch eingeschränkt, um eine vereinfachte Auswahl durch den Anwender vorzubereiten. Mit anderen Worten werden dem Anwender anschließend lediglich diejenigen CAB-Vorlagen dargestellt, welche zur Erbringung einer Dienstleistung aus der Dienstleistungsfamilie vorgesehen sind, welche der Dienstleistung entspricht, welche der Anwender zu erbringen gedenkt. In Schritt 600 wird eine Repräsentation der eingeschränkten Vielzahl verfügbarer unterschiedlicher CAB-Vorlagen dargestellt. In Schritt 700 wird eine Definition einer Farbe/Farbkombination vom Anwender abgefragt. Mit anderen Worten wird der Anwender ersucht, die Farbe/Farbkombination seiner Wahl kundzutun. In Schritt 800 werden im Ansprechen darauf vordefinierte Oberflächenbereiche entsprechend der vorgenannten Farbdefinition der ausgewählten CAB gestaltet. Dieser Schritt 800 kann sich alternativ oder zusätzlich an die Schritte 900, 1000 und 1100 anschließen. In Schritt 900 wird anschließend eine Eingabe des Anwenders zur Auswahl eines vordefinierten Verkehrsraumes ermittelt. Hierdurch werden Einsatzortspezifische Parameter der CAB automatisch festgelegt (Schritt 1000) und andere ausgeschlossen (Schritt 1100). Auf diese Weise wird sichergestellt, dass die zu konfigurierende CAB gesetzliche Anforderungen und Vorlieben der adressierten Kundschaft erfüllt.

Im Ergebnis wird die Bereitstellung von Dienstleistungen innerhalb von Servicemobilen während der Fahrt durch die erfindungsgemäße Konfiguration kinderleicht. Während die gefühlte Konfiguration sicherstellt, dass automobile Randbedingungen bei der Gestaltung des Servicemobils bzw. der CAB eingehalten werden, kann sich der Anwender als Spezialist auf seinem Gebiet vollständig um diejenigen Eigenschaften der CAB kümmern, welche zur Erbringung der Dienstleistung erforderlich sind.

### Bezugszeichenliste

- 1: erste CAB
- 1': Repräsentation von CAB-Vorlagen
- 1a: mechanische Schnittstelle der CAB
- 1 b: informationstechnische/energetische Schnittstelle der CAB
- 2: zweite CAB
- 7: Server
- 8: Funkturm
- 10: Fahrlafette
- 10a: mechanische Schnittstelle der Fahrlafette
- 10b: energetische/informationstechnische Schnittstelle der Fahrlafette
- 11: Repräsentation der Farbpalette
- 12: Anwender
- 13: Serviceprovider
- 14: Micro-Service-Provider
- 15: Mouse-Port
- 16: Monitor-Port
- 100-1100: Verfahrensschritte
- D1-D8: Dienstleistungen
- D': Repräsentation von Dienstleistungen

## Patentansprüche

1. Verfahren zur Konfiguration einer dienstleistungsspezifisch ausgestalteten Kabine (1), nachfolgend "CAB (1)" genannt, für ein temporär aus einer Fahrlafette (10) und der CAB (1) zusammengesetztes Servicemobil (20) zur Erbringung einer Dienstleistung (D1-D8) während der Fahrt umfassend die Schritte:
- Ermitteln (200) einer Eingabe eines Anwenders (12) zur Auswahl einer vordefinierten Dienstleistungsfamilie, welcher die Dienstleistung (D1-D8) zugehört, und in Abhängigkeit der Dienstleistungsfamilie
- automatisches Einschränken (500) einer auswählbaren Vielzahl unterschiedlicher CAB-Vorlagen zur Auswahl durch den Anwender (12) auf derartige CAB-Vorlagen, welche zur Erbringung einer Dienstleistung (D1-D8) aus der Dienstleistungsfamilie vorgesehen sind.

2. Verfahren nach Anspruch 1 weiter umfassend
- Darstellen (600) von Repräsentationen (1') der eingeschränkten Vielzahl verfügbarer unterschiedlicher CAB-Vorlagen.

3. Verfahren nach Anspruch 1 oder 2 weiter umfassend
- Darstellen (300) von Repräsentationen (D') sämtlicher in der Dienstleistungsfamilie enthaltener Dienstleistungen (D1-D8).

4. Verfahren nach einem der vorstehenden Ansprüche weiter umfassend
- Ermitteln (400) einer Eingabe des Anwenders (12) zur Auswahl einer verfügbaren Dienstleistung (D1-D8), welche der ausgewählten Dienstleistungsfamilie zugehört.

5. Verfahren nach einem der vorstehenden Ansprüche weiter umfassend
- Darstellen (100) einer Vielzahl vordefinierter Dienstleistungsfamilien repräsentierend vordefinierte Dienstleistungen (D1-D8), für welche CAB-Vorlagen vorgesehen sind.

6. Verfahren nach einem der vorstehenden Ansprüche, wobei die CAB-Vorlagen datentechnisch
- vollständige Spezifikationen und/oder
- Teil-Spezifikationen und/oder
- datentechnische 3D-Modelle
sind.

7. Verfahren nach einem der vorstehenden Ansprüche weiter umfassend
- Abfragen (700) einer Definition einer Farbdefinition vom Anwender (12) und
- Gestalten (800) eines vordefinierten Oberflächenbereiches entsprechend der Farbdefinition der ausgewählten CAB (1).

8. Verfahren nach einem der vorstehenden Ansprüche weiter umfassend
- Ermitteln (900) einer Eingabe eines Anwenders (12) zur Auswahl eines vordefinierten Verkehrsraumes, insbesondere einer vordefinierten Region, bevorzugt eines Staates, und in Abhängigkeit der Eingabe
- automatisches Festlegen (1000) oder Ausschließen (1100)
- einer Ausstattungsvariante und/oder
- eines Parameters einer Ausstattung der CAB (1).

9. Verfahren nach Anspruch 8, wobei die Ausstattungsvariante bzw. Ausstattung
- ein Heiz- und/oder Klimaaggregat und/oder
- eine Tönung eines Fensters und/oder
- eine Bordnetzarchitektur und/oder
- eine elektrische Bordnetzspannung
umfasst.

10. Verfahren nach einem der vorstehenden Ansprüche, wobei das Ermitteln der Eingabe des Anwenders (12) rechnergestützt erfolgt.

11. Vorrichtung zur Konfiguration einer dienstleistungsspezifisch ausgestalteten Kabine (1), nachfolgend "CAB (1)" genannt, für ein temporär aus einer Fahrlafette (10) und der CAB (1) zusammengesetztes Servicemobil (20) zur Erbringung einer Dienstleistung (D1-D8) während der Fahrt umfassend:
- einen Dateneingang (15),
- eine Auswerteeinheit (7) und
- einen Datenausgang (16), wobei die Auswerteeinheit (7) eingerichtet ist,
- mittels des Dateneingangs (15) eine Eingabe eines Anwenders (12) zur Auswahl einer vordefinierten Dienstleistungsfamilie, welcher die Dienstleistung (D1-D8) zugehört, zu ermitteln und in Abhängigkeit der Dienstleistungsfamilie
- eine auswählbare Vielzahl unterschiedlicher CAB-Vorlagen zur Auswahl durch den Anwender (12) auf derartige CAB-Vorlagen, welche zur Erbringung der Dienstleistung (D1-D8) aus der Dienstleistungsfamilie vorgesehen sind, automatisch einzuschränken.

12. Vorrichtung nach Anspruch 11, welche eingerichtet ist, ein Verfahren nach einem der vorstehenden Ansprüche 1 bis 10 auszuführen.

13. Computerprogrammprodukt umfassend Instruktionen, welche, wenn Sie auf einer Auswerteeinheit (7) einer Vorrichtung gemäß einem der Ansprüche 11 oder 12 ausgeführt werden, die Auswerteeinheit (7) veranlassen, die Schritte eines Verfahrens nach einem der Ansprüche 1 bis 10 durchzuführen.

14. Signalfolge repräsentierend Instruktionen, welche, wenn Sie auf einer Auswerteeinheit (7) einer Vorrichtung gemäß einem der Ansprüche 11 oder 12 ausgeführt werden, die Auswerteeinheit (7) veranlassen, die Schritte eines Verfahrens nach einem der Ansprüche 1 bis 10 durchzuführen.
